# EUROPEAN PATENT APPLICATION

(11) **EP 2 945 338 A1**
(43) Date of publication of application: **18.11.2015**
(21) Application number: 13870518.1
(22) Date of filing: 26.08.2013
(51) Int. Cl.: H04L 29/06, H04L 12/70

(54) **DATA TRANSMISSION METHOD AND DEVICE**

(30) Priority: 08.01.2013 CN 201310006125
(71) Applicant: ZTE Corporation, Shenzhen, Guangdong 518057 (CN)
(72) Inventor: WANG, Zhaoxin, Shenzhen Guangdong 518057 (CN)
(74) Representative: Modiano, Micaela Nadia
(86) International application number: PCT/CN2013/082316
(87) International publication number: WO 2014/107963

(57) **Abstract**

Provided are a data transmission method and device. The method includes: searching in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol; and transmitting data required to be sent by the data sending terminal to the data receiving terminal according to the one or more found data transmission paths. The technical solution effectively solves the problem of transmission distance and transmission protocol restrictions in the related art when a terminal transmits data in real time via wireless techniques, thus increasing wireless transmission distance, and facilitating user data transmission and sharing.

## Description

### Technical field

The present disclosure relates to the field of communications, and especially to a data transmission method and device.

### Background

In recent years, with the rapid development of various wireless techniques, many benefits are brought about by wireless networking. For example, people can exchange electronic business cards, files or any other information with wireless networking easily. It is also possible to establish a personal area network by connecting a personal computer (PC) with external devices such as a handheld device, a mobile phone, a printer, a scanner, a fax machine and a copying machine via wireless techniques.

A disadvantage of the wireless techniques is a limited transmission distance. For instance, a terminal A and a terminal B can be connected via the wireless techniques, and the terminal B and a terminal C can also be connected via the wireless techniques, but the terminal A and the terminal C may not be connected for communication because of the relatively long distance between them.

In addition, the data interaction between terminals is based on the support of one protocol. For example, the terminal A and the terminal B can perform communication using wireless local area networks (WLANs), and the terminal B and the terminal C can perform communication using Bluetooth, but real-time communication cannot be performed between the terminal A and the terminal C.

It can be seen that the two situations described above can both result in that communication cannot be performed between the terminal A and the terminal C. However, for the problems of transmission distance and transmission protocol restrictions in the related art when a terminal transmits data in real time via wireless techniques, no effective solutions have been proposed at present.

### Summary

The embodiments of the present disclosure provide a data transmission method and device, so as to effectively solve at least one of the problems of transmission distance and transmission protocol restrictions in the related art when a terminal transmits data in real time via wireless techniques.

In order to solve at least one of the above-mentioned technical problems, in an aspect, an embodiment of the present disclosure provides a data transmission method, the method including: searching in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol; and transmitting data required to be sent by the data sending terminal to the data receiving terminal according to the one or more found data transmission paths.

In an example embodiment, before searching in the routing table for the one or more available data transmission paths between the data sending terminal and the data receiving terminal, the method further includes: the various terminals performing networking using at least one wireless communication protocol; and updating, according to a result of the networking, the routing table to determine the currently available data transmission paths.

In an example embodiment, updating, according to the result of the networking, the routing table to determine the currently available data transmission paths includes: acquiring current connection relationship between various terminals according to the result of the networking; and disconnecting and/or combining, according to the current connection relationship between the various terminals, the data transmission paths between the various terminals in the routing table to obtain updated data transmission paths as the currently available data transmission paths.

In an example embodiment, transmitting the data required to be sent by the data sending terminal to the data receiving terminal according to the one or more found data transmission paths includes: determining an optimal data transmission path according to the number of terminals involved in each found data transmission path and/or throughput between terminals involved in each found data transmission path; and transmitting the data required to be sent by the data sending terminal to the data receiving terminal according to the determined optimal transmission path.

In an example embodiment, transmitting the data required to be sent by the data sending terminal to the data receiving terminal according to the one or more found data transmission paths includes: step A: determining an optimal data transmission path according to the number of terminals involved in each found data transmission path and/or throughput between terminals involved in each found data transmission path; step B: transmitting the data required to be sent by the data sending terminal to a next terminal adjacent to the data sending terminal in the optimal data transmission path; step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and carrying out steps A to C, until the data transmission is completed.

In another aspect, an embodiment of the present disclosure also provides a data transmission device, and the device includes: a searching element configured to search in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol; and a transmission element configured to transmit data required to be sent by the data sending terminal to the data receiving terminal according to the one or more found data transmission paths.

In an example embodiment, the device further includes: a networking element configured to, before the searching element searches in the routing table for the one or more available data transmission paths between the data sending terminal and the data receiving terminal, control the various terminals to perform networking using at least one wireless communication protocol; and a determination element configured to update, according to a result of the networking, the routing table to determine the currently available data transmission paths.

In an example embodiment, the determination element includes: an acquisition component configured to, acquire current connection relationship between the various terminals according to the result of the networking; and a disconnection/combination component configured to disconnect and/or combine, according to the current connection relationship between the various terminals, the data transmission paths between the various terminals in the routing table to obtain updated data transmission paths as the currently available data transmission paths.

In an example embodiment, the transmission element includes: a determination component configured to, determine an optimal data transmission path according to the number of terminals involved in each found data transmission path and/or throughput between terminals involved in each found data transmission path; and a transmission component configured to transmit the data required to be sent by the data sending terminal to the data receiving terminal according to the determined optimal data transmission path.

In an example embodiment, the transmission element is configured to transmit the data required to be sent by the data sending terminal to the data receiving terminal according to steps as follows: step A: determining an optimal data transmission path according to the number of terminals involved in each found data transmission path and/or throughput between terminals involved in each found data transmission path; step B: transmitting the data required to be sent by the data sending terminal to a next terminal adjacent to the data sending terminal in the optimal data transmission path; step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and carrying out steps A to C, until the data transmission is completed.

The benefit effects of the embodiments of the present disclosure are described as follows.

In the embodiments of the present disclosure, the connection conditions between various terminals are recorded in real time to construct a routing table and dynamically organize a wireless network. During wireless data transmission, one or more currently available data transmission paths are searched for in the routing table, and data required to be sent by a data sending terminal is transferred via one or more other terminals and is finally transmitted to a data receiving terminal. This data transmission method is able to complete data transmission using different protocols between different terminals, thereby effectively solving at least one of the problems of transmission distance and transmission protocol restrictions in the related art when a terminal transmits data in real time via wireless techniques, increasing wireless transmission distance, and facilitating user data transmission and sharing.

### Brief description of the drawings

Fig. 1 is an example flowchart of a data transmission method in an embodiment of the present disclosure;
Fig. 2 is an example flowchart of terminals performing networking in an embodiment of the present disclosure;
Fig. 3 is an example flowchart of data transmission in an embodiment of the present disclosure;
Fig. 4 is a first example structural block diagram of a data transmission device in an embodiment of the present disclosure;
Fig. 5 is a second example structural block diagram of a data transmission device in an embodiment of the present disclosure;
Fig. 6 is a third example structural block diagram of a data transmission device in an embodiment of the present disclosure; and
Fig. 7 is a fourth example structural block diagram of a data transmission device in an embodiment of the present disclosure.

### Detailed description of the embodiments

In order to effectively solve at least one of the problems of transmission distance and transmission protocol restrictions in the related art when a terminal transmits data in real time via wireless techniques, the embodiments of the present disclosure provide a data transmission method and device. The present disclosure is described below with reference to the accompanying drawings and embodiments in detail. Note that, the embodiments of the present disclosure and the features of the embodiments can be combined with each other if there is no conflict.

### Embodiment 1

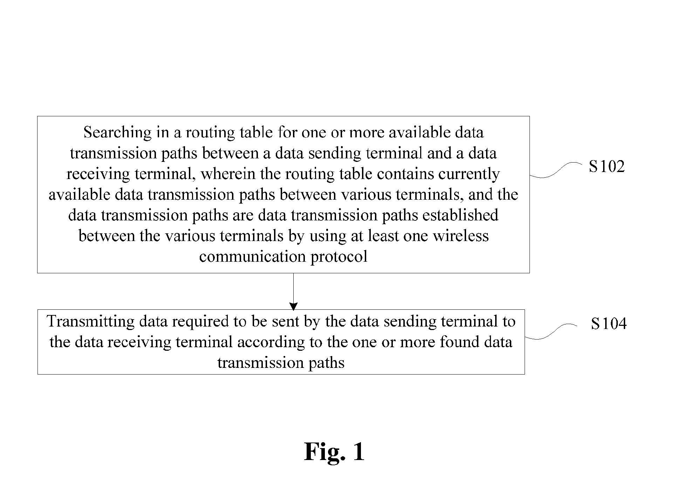

An example embodiment of the present disclosure provides a data transmission method. As shown in Fig. 1, the method includes the following steps.

In step S102, one or more available data transmission paths between a data sending terminal and a data receiving terminal are searched for in a routing table, wherein the routing table contains currently available data transmission paths between various terminals, and the data transmission paths are data transmission paths established between the various terminals by using at least one wireless communication protocol.

In an example embodiment, current connection relationship between various terminals is recorded in the routing table. After the data sending terminal and the data receiving terminal are determined, the available data transmission paths can be acquired in the routing table according to the connection relationship between various terminals. For example, if the data sending terminal is a terminal A and the data receiving terminal is a terminal D, then it is possible to search in the routing table to acquire one or more available data transmission paths from the terminal A to the terminal D, e.g., supposing that there is a certain path in the routing table: A→B→C→D, then this path can be taken as an available data transmission path. In an example embodiment, the paths between terminals A, B, C and D may be based on the same wireless communication protocol, and may also be based on different wireless communication protocol. For example, data communication is performed using wifi between A→B, data communication is performed using bluetooth between B→C, and data communication is performed using infrared rays between C→D.

In step S104, data required to be sent by the data sending terminal is transmitted to the data receiving terminal according to the one or more found data transmission paths.

In an example embodiment, after the one or more available data transmission paths are found, a corresponding transmission path may selected for data transmission according to a pre-defined rule. In an example embodiment, the path may be selected according to the number of terminals between the data transmission terminal and the data receiving terminal, and data may also be selected according to network throughput.

In the above-mentioned example implementation, the connection conditions between various terminals are recorded in real time to construct a routing table and dynamically organize a wireless network. During wireless data transmission, one or more currently available data transmission paths are searched for in the routing table, and data required to be sent by a data sending terminal is transferred via one or more other terminals and is finally transmitted to a data receiving terminal. This data transmission method is able to complete data transmission using different protocols between different terminals, thereby effectively solving at least one of the problems of transmission distance and transmission protocol restrictions in the related art when a terminal transmits data in real time via wireless techniques, increasing wireless transmission distance, and facilitating user data transmission and sharing.

In an example implementation of the present disclosure, the above-mentioned method is also optimized. Specifically, before searching in the routing table for the one or more available data transmission paths between the data sending terminal and the data receiving terminal, the method may further include: the various terminals performing networking using at least one wireless communication protocol; and updating, according to a result of the networking, the routing table to determine the currently available data transmission paths. In the above-mentioned example implementation, various terminals may perform networking using a plurality of wireless communication protocols, and carry out update to ensure smooth transmission of data.

In an example implementation of the present disclosure, an example solution of updating, according to the result of the networking, the routing table to determine the currently available data transmission paths is also provided. Specifically, the solution includes the following steps: according to the result of the networking, acquiring current connection relationship between various terminals; and disconnecting and/or combining, according to the current connection relationship between the various terminals, the data transmission paths between the various terminals in the routing table to obtain updated data transmission paths as the currently available data transmission paths.

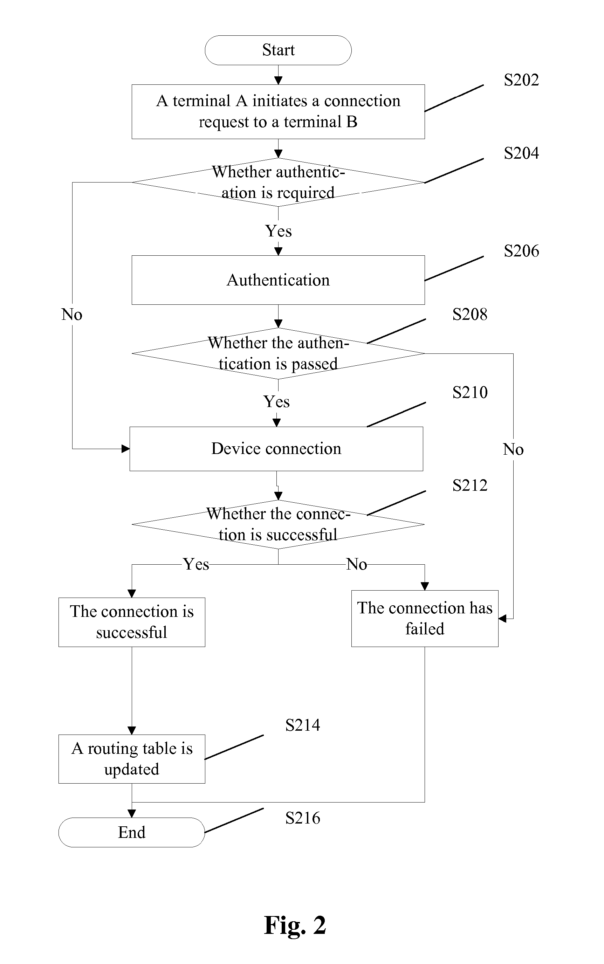

Specifically, Fig. 2 illustrates a solution of terminals performing networking. As shown in Fig. 2, when a terminal A and a terminal B perform networking, the following steps are included.

In step S202, the terminal A initiates a connect request to the terminal B.

In step S204, whether it is required to perform authentication is judged; and if the judgement result is that it is required to perform the authentication, step S206 is carried out, otherwise, step S210 is carried out.

In step S206, an authentication operation is carried out.

In step S208, whether the authentication is passed is judged; and if the authentication is passed, then step S210 is carried out, otherwise, it is decided that the connection has failed, and step S216 is carried out.

In step S210, device connection is carried out between the terminal A and the terminal B.

In step S212, whether the terminal A and the terminal B are connected successfully is judged; and if they are connected successfully, step S214 is carried out, otherwise, it is decided that the connection has failed, and step S216 is carried out.

In step S214, the routing table is updated.

In step S216, the flow is ended.

During routing table update, any terminal in a network may be taken as a relay device. For example, if terminals C and D are connected successfully to form a sub-network after terminals A and B are connected successfully, and the terminal B and the terminal C are then connected successfully, then the routing table in the terminal B and the terminal C is updated as A↔B↔C↔D; at the same time, not only the terminal B notifies the terminal A, but also the terminal C notifies the terminal D to update the routing table synchronously as A↔B↔C↔D; the four terminals are integrated into one network, and real-time communication can be carried out between the terminals. For the same reasoning, if the terminal B and the terminal D are also connected successfully, then all the routing tables are updated synchronously, and it is recorded that B and D are directly connected.

In an example embodiment, if any two of the terminals are disconnected, then the routing tables of all relevant terminals are updated synchronously at once. Assuming that the current connection condition is A↔B↔C↔D, if the terminal B and the terminal C are disconnected, then the network is divided into two networks: one is the network containing the terminal A and the terminal B, and the other one is the network containing the terminal C and the terminal D.

In the above-mentioned example implementation, the routing tables are updated in real time upon connection and disconnection between terminals, and the smooth transmission of data is guaranteed.

Additionally, an embodiment of the present disclosure also provides an example solution of transmitting data required to be sent by the data sending terminal to the data receiving terminal according to the one or more found data transmission paths. Specifically, an optimal data transmission path may be determined according to the number of terminals involved in each found data transmission path and/or throughput between terminals involved in each found data transmission path; and the data required to be sent by the data sending terminal may be transmitted to the data receiving terminal according to the determined optimal transmission path. In an example embodiment, when selecting the optimal data transmission path, the choice may be made according to the number of terminals between the data sending terminal and the data receiving terminal, and may also be made according to the throughput of one or more networks between terminals. After the optimal data transmission path is selected, transmission is carried out according to the path. In the above-mentioned example implementation, the efficiency of wireless network transmission is guaranteed by selecting the optimal data transmission path.

An example embodiment of the present disclosure also provides an example solution of transmitting the data required to be sent by the data sending terminal to the data receiving terminal according to the one or more found data transmission paths. Specifically, the solution includes the following steps: step A: determining an optimal data transmission path according to the number of terminals involved in each found data transmission path and/or throughput between terminals involved in each found data transmission path; step B: transmitting the data required to be sent by the data sending terminal to a next terminal adjacent to the data sending terminal in the optimal data transmission path; step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and carrying out steps A to C, until the data transmission is completed.

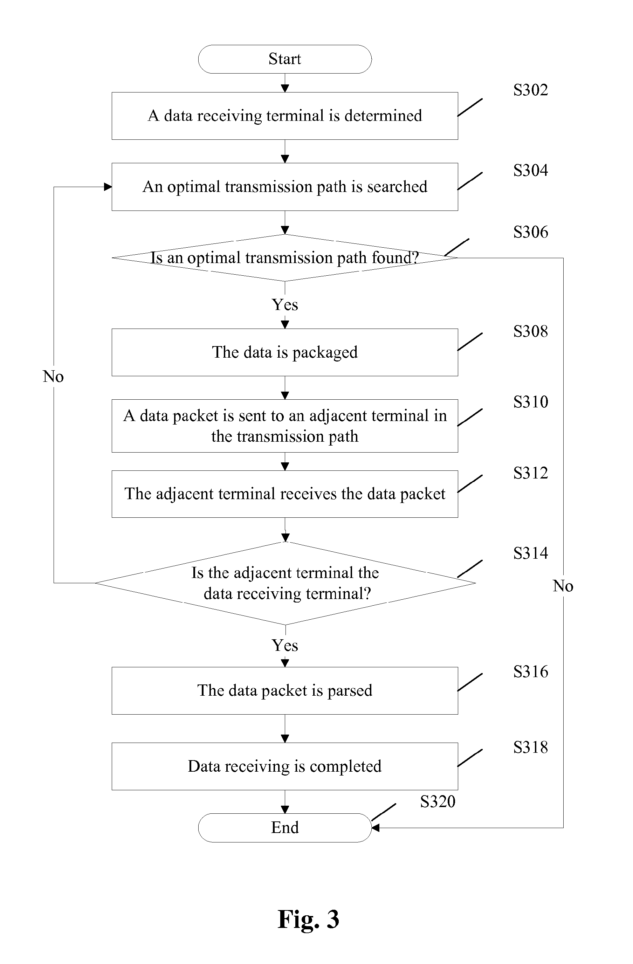

The above-mentioned solution is described in detail in combination with the accompanying drawings. As shown in Fig. 3, the data transmission process includes the following steps.

In step S302, a data sending terminal determines a data receiving terminal.

In step S304, an optimal transmission path is searched for in a routing table according to the determined data receiving terminal.

In step S306, whether the optimal transmission path is found is judged; and if the optimal transmission path is found, step S308 is carried out, in an example embodiment, if there is no optimal transmission optimal, step S320 may be carried out to end the flow, or it is also possible to continue filtering by considering other feasible paths or referring to other rules.

In step S308, according to a protocol used during the connection of a downstream adjacent terminal in the transmission path, the data is packaged. In an example embodiment, the data may contain address information about the data receiving terminal.

In step S310, the data packet is sent to the downstream adjacent terminal in the transmission path.

In step S312, the adjacent terminal receives the data packet.

In step S314, whether the terminal is the data receiving terminal is judged; if the terminal is the data receiving terminal, then S316 is carried out, otherwise step S304 is jumped to, so as to continue searching for the optimal transmission path, taking the terminal as the data sending terminal.

In step S316, the data packet is parsed.

In step S318, data receiving is completed.

In step S320, the flow is ended.

### Embodiment 2

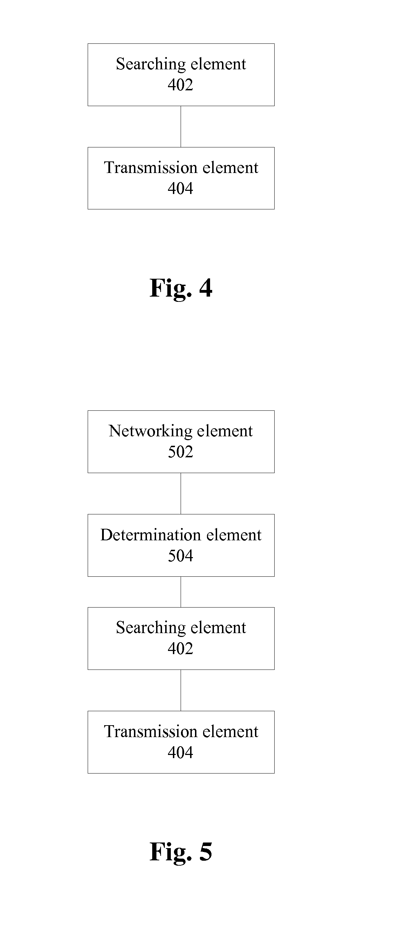

Based on the data transmission method provided in embodiment 1, this example embodiment provides a data transmission device. Fig. 4 illustrates an example structural block diagram of the data transmission device. As shown in Fig. 4, the device includes: a searching element 402 configured to search in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol.

In an example embodiment, current connection relationship between various terminals is recorded in the routing table. After the data sending terminal and the data receiving terminal are determined, at least one available data transmission path can be acquired in the routing table according to the connection relationship between various terminals. For example, if the data sending terminal is a terminal A and the data receiving terminal is a terminal D, then it is possible to search in the routing table to acquire one or more available data transmission paths from the terminal A to the terminal D, e.g., supposing that there is a certain path in the routing table: A→B→C→D, then this path may be taken as an available data transmission path. In an example embodiment, the paths between terminals A, B, C and D may be based on the same wireless communication protocol, and may also be based on different wireless communication protocol. For example, data communication is performed using wifi between A→B, data communication is performed using bluetooth between B→C, and data communication is performed using infrared rays between C→D.

The device also includes a transmission element 404, coupled with the searching element 402, configured to transmit data required to be sent by the data sending terminal to the data receiving terminal according to the one or more found data transmission paths.

In an example embodiment, after the one or more available data transmission paths are found, a corresponding transmission path may selected for data transmission according to a pre-defined rule. In an example embodiment, the path may be selected according to the number of terminals between the data transmission terminal and the data receiving terminal, and data may also be selected according to network throughput.

In the above-mentioned example implementation, the connection conditions between various terminals are recorded in real time to construct a routing table and dynamically organize a wireless network. During wireless data transmission, one or more currently available data transmission paths are searched for in a routing table, and data required to be sent by a data sending terminal is transferred via one or more other terminals and is finally transmitted to a data receiving terminal. This data transmission method is able to complete data transmission using different protocols between different terminals, thereby effectively solving at least one of the problems of transmission distance and transmission protocol restrictions in the related art when a terminal transmits data in real time via wireless techniques, increasing wireless transmission distance, and facilitating user data transmission and sharing.

In an example implementation of the present disclosure, the above-mentioned device is also optimized. Specifically, as shown in Fig. 5, the device may further include: a networking element 502 configured to, before the searching element searches in the routing table for the one or more available data transmission paths between the data sending terminal and the data receiving terminal, control the various terminals to perform networking using at least one wireless communication protocol; and a determination element 504, coupled with the networking element 502 and the searching element 402, configured to update, according to a result of the networking, a routing table to determine the currently available data transmission paths. In the above-mentioned example implementation, various terminals may perform networking using a plurality of wireless communication protocols, and carry out update to ensure smooth transmission of data.

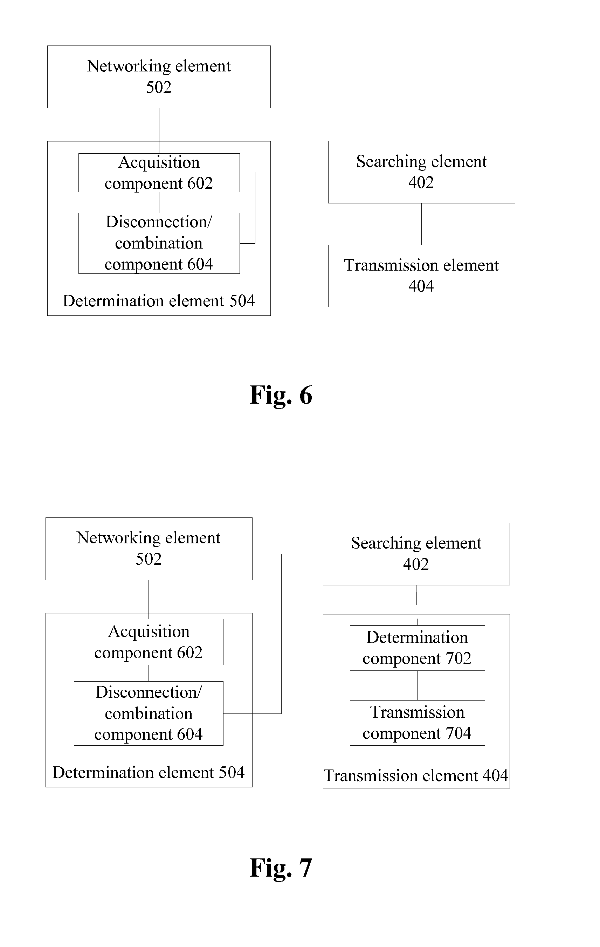

In an example implementation of the present disclosure, an example solution of updating, according to a result of the networking, the routing table to determine the currently available data transmission paths is also provided. Specifically, as shown in Fig. 6, the determination element 504 may include: an acquisition component 602 configured to acquire current connection relationship between the various terminals according to the result of the networking; and a disconnection/combination component 604, coupled with the acquisition component 602, configured to disconnect and/or combine, according to the current connection relationship between the various terminals, the data transmission paths between the various terminals in the routing table to obtain updated data transmission paths as the currently available data transmission paths. The particular networking process may be implemented according to the method provided in Fig. 2, which will not be described any more.

During routing table update, any terminal in a network may be taken as a relay device. For example, if terminals C and D are connected successfully to form a sub-network after terminals A and B are connected successfully, and the terminal B and the terminal C are then connected successfully, then the routing table in the terminal B and the terminal C is updated as A↔B↔C↔D; at the same time, not only the terminal B notifies the terminal A, but also the terminal C notifies the terminal D to update the routing table synchronously as A↔B↔C↔D; the four terminals are integrated into one network, and real-time communication can be carried out between the terminals. For the same reasoning, if the terminal B and the terminal D are also connected successfully, then all the routing tables are updated synchronously, and it is recorded that B and D are directly connected.

In an example embodiment, if any two of the terminals are disconnected, then the routing tables of all relevant terminals are updated synchronously at once. Assuming that the current connection condition is A↔B↔C↔D, if the terminal B and the terminal C are disconnected, then the network is divided into two networks: one is the network containing the terminal A and the terminal B, and the other one is the network containing the terminal C and the terminal D. In the above-mentioned example implementation, the routing tables are updated in real time upon connection and disconnection between terminals, and the smooth transmission of data is guaranteed.

Additionally, an embodiment of the present disclosure also provides an example solution of transmitting the data required to be sent by the data sending terminal to the data receiving terminal according to the one or more found data transmission paths. Specifically as shown in Fig. 7, the transmission element 404 may include: a determination component 702 configured to determine an optimal data transmission path according to the number of terminals involved in each found data transmission path and/or throughput between terminals involved in each found data transmission path; and a transmission component 704, coupled with the determination component 702, configured to transmit the data required to be sent by the data sending terminal to the data receiving terminal according to the determined optimal transmission path. In an example embodiment, when selecting the optimal data transmission path, the choice may be made according to the number of terminals between the data sending terminal and the data receiving terminal, and may also be made according to the throughput of one or more networks between terminals. After the optimal data transmission path is selected, transmission is carried out according to the path. In the above-mentioned example implementation, the efficiency of wireless network transmission is guaranteed by selecting the optimal data transmission path.

An example embodiment of the present disclosure also provides an example solution of transmitting the data required to be sent by the data sending terminal to the data receiving terminal according to the one or more found data transmission paths. Specifically, the transmission element 404 may be configured to accomplish data transmission according to the following steps: step A: determining an optimal data transmission path according to the number of terminals involved in each found data transmission path and/or throughput between terminals involved in each found data transmission path; step B: transmitting the data required to be sent by the data sending terminal to a next terminal adjacent to the data sending terminal in the optimal data transmission path; step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and carrying out steps A to C, until the data transmission is completed.

It can be seen from the above-mentioned description that in the embodiments of the present disclosure, the connection conditions between various terminals are recorded in real time to construct a routing table and dynamically organize a wireless network. During wireless data transmission, one or more currently available data transmission paths are searched for in the routing table, and data required to be sent by a data sending terminal is transferred via one or more other terminals and is finally transmitted to a data receiving terminal. This data transmission method is able to complete data transmission using different protocols between different terminals, thereby effectively solving at least one of the problems of transmission distance and transmission protocol restrictions in the related art when a terminal transmits data in real time via wireless techniques, increasing wireless transmission distance, and facilitating user data transmission and sharing.

### Industrial applicability

The data transmission solution provided in the embodiments of the present disclosure records the connection conditions between various terminals in real time to construct a routing table and dynamically organize a wireless network. During wireless data transmission, one or more currently available data transmission paths are searched for in the routing table, and data required to be sent by a data sending terminal is transferred via one or more other terminals and is finally transmitted to a data receiving terminal. Based on the existing terminals and transmission paths in current networking, the solution increases wireless transmission distance, and gets rid of the restriction of transmission protocols, thus providing a more optimized solution for a user on the basis of terminals and devices of current networking, and having good industrial applicability.

Although example embodiments of the present disclosure are already disclosed for the purpose of illustration, a person skilled in the art would appreciate that various improvement, addition and replacement are also possible, and therefore the scope of the present disclosure should not be restricted to the embodiments above.

## Claims

1. A data transmission method, **characterized by** comprising:
searching in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol; and
transmitting data required to be sent by the data sending terminal to the data receiving terminal according to the one or more found data transmission paths.

2. The method according to claim 1, **characterized in that** before searching in the routing table for the one or more available data transmission paths between the data sending terminal and the data receiving terminal, the method further comprises:
the various terminals performing networking using at least one wireless communication protocol;
updating, according to a result of the networking, the routing table to determine the currently available data transmission paths.

3. The method according to claim 2, **characterized in that** updating, according to the result of the networking, the routing table to determine the currently available data transmission paths comprises:
acquiring current connection relationship between the various terminals according to the result of the networking; and
disconnecting and/or combining, according to the current connection relationship between the various terminals, the data transmission paths between the various terminals in the routing table to obtain updated data transmission paths as the currently available data transmission paths.

4. The method according to any one of claims 1 to 3, **characterized in that** transmitting the data required to be sent by the data sending terminal to the data receiving terminal according to the one or more found data transmission paths comprises:
determining an optimal data transmission path according to the number of terminals involved in each found data transmission path and/or throughput between terminals involved in each found data transmission path; and
transmitting the data required to be sent by the data sending terminal to the data receiving terminal according to the determined optimal data transmission path.

5. The method according to any one of claims 1 to 3, **characterized in that** transmitting the data required to be sent by the data sending terminal to the data receiving terminal according to the one or more found data transmission paths comprises:
step A: determining an optimal data transmission path according to the number of terminals involved in each found data transmission path and/or throughput between terminals involved in each found data transmission path;
step B: transmitting the data required to be sent by the data sending terminal to a next terminal adjacent to the data sending terminal in the optimal data transmission path;
step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and
carrying out steps A to C, until the data transmission is completed.

6. A data transmission device, **characterized by** comprising:
a searching element configured to search in a routing table for one or more available data transmission paths between a data sending terminal and a data receiving terminal, wherein the routing table contains currently available data transmission paths between various terminals, and the data transmission paths are data transmission paths established between the various terminals by using at least one wireless communication protocol; and
a transmission element configured to transmit data required to be sent by the data sending terminal to the data receiving terminal according to the one or more found data transmission paths.

7. The device according to claim 6, **characterized by** further comprising:
a networking element configured to, before searching element searches in the routing table for the one or more available data transmission paths between the data sending terminal and the data receiving terminal, control the various terminals to perform networking using at least one wireless communication protocol; and
a determination element configured to update, according to a result of the networking, the routing table to determine the currently available data transmission paths.

8. The device according to claim 7, **characterized in that** the determination element comprises:
an acquisition component configured to acquire current connection relationship between the various terminals according to the result of the networking; and
a disconnection/combination component configured to disconnect and/or combine, according to the current connection relationship between the various terminals, the data transmission paths between the various terminals in the routing table to obtain updated data transmission paths as the currently available data transmission paths.

9. The device according to any one of claims 6 to 8, **characterized in that** the transmission element comprises:
a determination component configured to determine an optimal data transmission path according to the number of terminals involved in each found data transmission path and/or throughput between terminals involved in each found data transmission path; and
a transmission component configured to transmit the data required to be sent by the data sending terminal to the data receiving terminal according to the determined optimal data transmission path.

10. The device according to any one of claims 6 to 8, **characterized in that** the transmission element is configured to transmit the data required to be sent by the data sending terminal to the data receiving terminal according to steps as follows:
step A: determining an optimal data transmission path according to the number of terminals involved in each found data transmission path and/or throughput between terminals involved in each found data transmission path;
step B: transmitting the data required to be sent by the data sending terminal to a next terminal adjacent to the data sending terminal in the optimal data transmission path;
step C: judging whether the next terminal adjacent to the data sending terminal is the data receiving terminal; when the next terminal adjacent to the data sending terminal is the data receiving terminal, then accomplishing data transmission, and when the next terminal adjacent to the data sending terminal is not the data receiving terminal, then updating the routing table, taking the next terminal adjacent to the data sending terminal as a new data sending terminal, and searching in the updated routing table for one or more available data transmission paths; and
carrying out steps A to C, until the data transmission is completed.
